# EUROPEAN PATENT SPECIFICATION

(11) **EP 2 328 683 B1**
(45) Date of publication and mention of the grant of the patent: **27.11.2019**
(21) Application number: 09781710.0
(22) Date of filing: 11.08.2009
(51) Int. Cl.: B01L 3/14, G06K 1/12

(54) **SAMPLE TUBE WITH IDENTIFICATION**
REAGENZGLAS MIT IDENTIFIZIERUNG
TUBE D ÉCHANTILLON AVEC IDENTIFICATION

(30) Priority: 25.08.2008 CH 13482008
(43) Date of publication of application: 08.06.2011
(73) Proprietor: Nexus Biosystems, Inc., Poway, California 92064 (US)
(72) Inventor: PINK, Rosa, CH-4432 Lampenberg (CH); BERGER, Martin, CH-3074 Muri (CH)
(74) Representative: OK pat AG
(86) International application number: PCT/EP2009/060392
(87) International publication number: WO 2010/023102

(56) References cited:
- EP-A- 0 473 415
- EP-A- 0 681 012
- WO-A-01/70404
- WO-A-02/080085
- WO-A1-95/24317
- DE-A1- 10 164 397
- DE-A1- 19 806 049
- US-A- 4 476 381
- US-A1- 2003 198 577
- US-B1- 6 372 293

## Description

According to the preamble of the independent claim 1, the invention relates to a sample tube with a top opening that is surrounded by side walls which merge into a bottom. The bottom of the sample tube comprises an essentially flat downside that is arranged farther to the top opening. The sample tube comprises an identification portion that is located at the bottom side of the sample tube.

Sample tubes for storage and transport of liquid samples are well known in e.g. laboratories that apply liquid handling techniques in biochemical and biological research or in clinical diagnosis. Whereas larger sample tubes can contain up to several milliliters of e.g. blood or other body fluids, smaller sample tubes are known as microtubes that may only contain some microliters of a liquid or a solid sample. Microtubes that can be stored in racks, which are of the size of a standard microplate (see ANSI / SBS standard 1-2004) are known form the prior art. There are racks of this format known for 96 microtubes (e.g. from EP 1 361 441 A1) as well as for 384 microtubes (e.g. EP 0 904 841 A2).

Especially for automatic transportation, storage, retrieval, and tracking of such sample tubes in complex laboratory environments, individual identification of the sample tubes is required. This is especially the case in clinical diagnosis laboratories where clear identification of each sample is a must.

From EP 1 210 979 B1 a sample tube is known which comprises a printed identification tag inside a fluid-tight bottom cap or within a gap in-between double side walls of the sample tube.

From JP 2004-053 566, a cylindrical mini-tube is known with a shallow cylindrical recessed part on the bottom face. The recessed part comprising a 2-D bar code on its ceiling face with information on the content stored in the mini-tube. The recessed part comprises a transparent protective board of a synthetic resin or the like to protect the recording face with the bar code in a water-tight fashion.

From JP 2006-232 292, a container with electronic tag and radio frequency identification (RFID) system is known. The electronic RFID tag preferably is fixed in approximately horizontal orientation to the bottom inside of the container. In order to protect the RFID tag from fluids in the container, a protective member having a recession is sealingly positioned over the tag. Another arrangement is known from JP 2006-168 757, where the RFID tag is situated in a recess on the downside of the bottom of a glass container; the RFID being sealingly covered by a glass plate that covers the recess.

Another approach is known from US 6,372,293 B1, which discloses a tubular container with an open top of unitary construction that includes an enclosed side wall and an integral bottom. On the planar exterior surface of the bottom, machine readable data are encoded within a multilayered opaque coating that is deposited onto the surface of the bottom. The machine readable code is formed in the multilayered coating by removing portions of the second layer.

Again another approach is known from US 6,270,728 B1, which discloses a test tube with a dot code on the surface thereof. The dot code, which is burned into the surface of the bottom of the test tube with a laser, is readable with an optical reading mechanism.

It is the object of the present invention to propose an alternative sample tube with an identification portion that is located at the bottom side.

This object is achieved by the features of the independent claim 1 in that a sample tube with a top opening that is surrounded by side walls which merge into a bottom is proposed. The bottom of the sample tube comprises an essentially flat downside that is arranged farther to the top opening, wherein the sample tube comprises an identification portion located at its bottom side. The alternative sample tube according to the present invention is characterized in that the identification portion is composed of:
i) an opaque material that is the same material as for the side walls and the bottom of the sample tube, the opaque material having a first color; and
ii) a transparent cover layer, wherein the transparent cover layer comprises a laser sensitive filler that, upon irradiation with a laser marking beam, turns an irradiated area of the transparent cover layer into an opaque area with a second color that is contrasting from the first color.

Additional preferred embodiments and inventive features derive from the dependent claims.

The sample tube according to preferred embodiments of the present invention and additional embodiments are now described in more detail with the help of the attached, schematic drawings without restricting the scope of the present invention. It is shown in:
- Fig. 1: a longitudinal section of a sample tube with a flat, two-part bottom structure and integrated identification according to a first preferred embodiment;
- Fig. 2: a longitudinal section of a sample tube with a recessed, two-part bottom structure and integrated identification according to a second preferred embodiment;
- Fig. 3: a longitudinal section of a sample tube with a flat, three-part bottom structure and integrated identification according to a first additional embodiment;
- Fig. 4: a longitudinal section of a sample tube with a narrowed, three-part bottom portion and integrated identification according to a second additional embodiment;
- Fig. 5: a longitudinal section of a sample tube with a narrowed, three-part bottom portion, integrated carrier walls, and integrated identification according to a third additional embodiment;
- Fig. 6: a longitudinal section of a sample tube with a narrowed, three-part bottom portion, snap-on carrier walls and identification according to a fourth additional embodiment;
- Fig. 7: a longitudinal section of a sample tube with a narrowed, four-part bottom portion, snap-on carrier walls and identification with a protective layer according to a fifth additional embodiment;
- Fig. 8: a longitudinal section of a sample tube with a narrowed, three-part bottom portion, snap-on carrier walls with an RFID tag and identification according to a sixth additional embodiment;
- Fig. 9: a longitudinal section of a sample tube with a narrowed, three-part bottom portion, molded-on carrier walls with an RFID tag and identification according to a seventh additional embodiment;
- Fig. 10: a longitudinal section of a sample tube with a flat, three-part bottom structure and integrated identification according to an eighth additional embodiment;
- Fig. 11: a longitudinal section of a sample tube with a narrowed, four-part bottom portion, snap-on carrier walls with an RFID tag and identification according to a ninth additional embodiment;
- Fig. 12: a longitudinal section of a sample tube with a narrowed, five-part bottom portion, snap-on carrier walls with an RFID tag and identification according to a tenth additional embodiment.

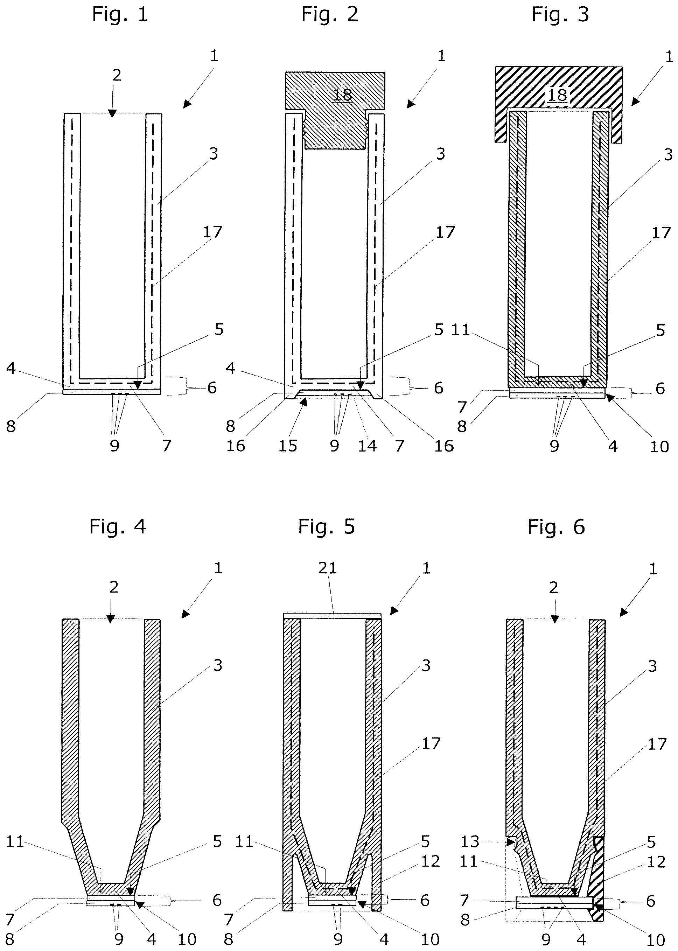

The Figure 1 shows a longitudinal section of a sample tube with a flat, two-part bottom structure and integrated identification according to a first embodiment of the invention. The sample tube 1 has a top opening 2 that is surrounded by side walls 3. These side walls preferably form a cylindrical tube and merge into a bottom 4. Deviating from this Figure 1, the sample tube 1 could also have an ellipsoidal or polyhedral cross section (not shown). The thickness of the side walls 3 considerably depends on the planned volume of the tube that typically ranges from 40 µl to 900 µl. A typical wall thickness is in the range of 0.3 mm to 2 mm and preferably ranges from 0.5 mm to 1 mm. The bottom 4 of the sample tube 1 comprises an essentially flat downside 5 that is arranged farther to the top opening 2. A typical bottom thickness is in the range of 0.2 mm to 1.2 mm and preferably ranges from 0.3 mm to 1 mm.

In addition, the sample tube 1 comprises an identification portion 6 that is located at the bottom side of the sample tube 1. According to the present invention, the identification portion 6 is composed of an opaque material 7 with a first color and a transparent cover layer 8. The transparent cover layer 8 comprises a laser sensitive filler that, upon irradiation with a laser marking beam, turns an irradiated area 9 of the transparent cover layer 8 into an opaque area with a second color that is contrasting from the first color. A typical transparent cover layer thickness is in the range of 0.2 mm to 1.0 mm and preferably ranges from 0.3 mm to 0.5 mm.

In the concept of the present invention, the expression "opaque" describes the ability of the material to block a considerable amount, i.e. at least 60 %, preferably more than 75 %, and especially preferred more than 90 %, of a laser scanning light as emitted by a bar code reader from penetrating this material. In the concept of the present invention, the expression "transparent" describes the ability of the material to let a considerable amount, i.e. at least 60 %, preferably more than 75 %, and especially preferred more than 90 %, of a laser canning light as emitted by a bar code reader passing through this material. In the concept of the present invention, the expression "filler" describes additives that preferably are equally dispersed within the plastic material of the respective parts of a sample tube 1 as specified below.

In a sample tube 1 according to the invention, is particularly preferred that the irradiated area 9 is part of an identification marking which is selected from a group that comprises a linear 1-D barcode, a circular 1-D barcode, and a 2-D barcode.

Figure 1 depicts a sample tube 1, of which the opaque material 7 of the identification portion 6 is the same material as for the side walls 3 and the bottom 4 of the sample tube 1. This opaque material 7 preferably exhibits a white or milky white first color. This sample tube with its side walls 2 and bottom 4 preferably is accomplished as an integral injection molded body of polypropylene (preferably PURELL HP371P, a polypropylene homo-polymer of LyondellBasell Industries, Rotterdam, The Netherlands) and it is preferred to color this sample tube 1 by adding an amount of 1 to 10 wt% of a white colorant, e.g. TiO₂ to the polypropylene prior to injection molding.

The preferred material for the transparent cover layer 8 again is polypropylene, wherein the material PURELL HP371P nature is especially preferred. As a laser sensitive filler, HP756197 LS (MAXITHEN® from GABRIEL-CHEMIE, Gumpoldskirchen, Austria) in an amount of about 0.5 to 5 wt% preferably is added to the polypropylene. This laser sensitive filler, upon irradiation with a laser marking beam, turns an irradiated area 9 of the transparent cover layer 8 into a dark grey or black opaque area that is well contrasting from the first color and that is easy to recognize with a conventional bar code reader. Other laser sensitive fillers (e.g. Iriodin® or Lazerflair®, which is available in seven color variants from MERCK KGaA, Darmstadt, Germany) may be chosen that also provide good contrasted irradiated areas 9, but that result in dark grey, dark red, dark blue, or dark green colored irradiated areas 9. The transparent cover layer 8 may be back-molded onto the bottom 4 of the sample tube 1, or the sample tube 1 may be back-molded onto the transparent cover layer 8. As a further possibility of producing large numbers of this sample tube 1 with a flat bottom according to the first embodiment, multi-component injection molding can be applied as well, one component being the sample tube 1 with side walls 3 and bottom 4, and another component being the transparent cover layer 8.

The Figure 2 shows a longitudinal section of a sample tube with a recessed, two-part bottom structure and integrated identification according to a second embodiment of the invention. The materials and dimensions preferably are the same as specified with respect to the Figure 1. The second preferred embodiment, however, comprises protective bars 16 that are located in the periphery of the bottom 4 and that protrude over the lower surface of the transparent cover layer 8. These protective bars can be accomplished as a closed ring structure or as a number of bars that are separated by depressions (not shown). In ay case, these protective bar or bars provide the transparent cover layer 8 with a protection against scratches in its surface. As an alternative protection of the surface of the transparent cover layer 8, the recess 15 between the protective bars 16 can be filled (e.g. by over-molding) with a transparent protective layer 14 (see dashed line in Figure 2) of polypropylene, preferably PURELL HP371P nature. In addition, the sample tubes of the present invention can be sealed with cap 18 that is screwed-on or pushed-on, screwed-in (as shown) or pushed-in.

In this second preferred embodiment, a two component bottom structure is shown. This bottom structure comprises the bottom 4 (as the opaque material 7) and the transparent layer 8. Thus, the identification portion 6 is formed from the bottom 4 of the sample tube 1 and the transparent layer 8.

The Figure 3 shows a longitudinal section of a sample tube with a flat, three-part bottom structure and integrated identification according to a first additional embodiment which is not entirely part of the preferred embodiments of the present invention. This sample tube 1 is characterized in that the opaque material 7 of the identification portion 6 is a different material as for the side walls 3 and the bottom 4 of the sample tube 1. In consequence and deviating from the first two embodiments already described, the preferred material for the side walls 3 and the bottom 4 is a transparent polymer material, like PURELL HP371P nature. The dimensions of this sample tube 1 with its side walls 2 and bottom 4, which preferably is accomplished as an integral injection molded body of polypropylene, preferably are the same as specified with respect to the Figure 1.

Similar to the previous embodiments, the opaque material 7 of this sample tube 1 exhibits a first bright color. Now however, the first color is selected from a group that comprises white, milky white, bright grey, bright red, bright blue, bright green, bright yellow, and bright orange, wherein the second color again is a dark color selected from a group comprising grey, red, blue, green and black. The opaque material 7 preferably is polypropylene (preferably PURELL HP371P) and it is preferred to color this opaque material 7 by adding an amount of 1 to 10 wt% of a white colorant, e.g. TiO₂ to the polypropylene. The preferred material for the transparent cover layer 8 again is polypropylene, wherein the material PURELL HP371P nature is especially preferred. As a laser sensitive filler also here, HP756197 LS (MAXITHEN® from GABRIEL-CHEMIE, Gumpoldskirchen, Austria) in an amount of about 0.5 to 5 wt% preferably is added to the polypropylene. It is also feasible that the opaque material 7 of the sample tube 1 is dark gray or black (which may be achieved by a carbon black filler) and that the transparent cover layer 8 comprises a special laser sensitive filler (e.g. white Lazerflair® 810 from MERCK KGaA, Darmstadt, Germany) that is changing into bright or white spots when irradiating the transparent cover layer 8 with a marking laser.

Actually, the opaque material 7 of the identification portion 6 and the transparent cover layer 8 with the filler together form a two-component plastic sheet 10, which may be produced by multi-component injection molding, laminating or back-molding. This two-component plastic sheet 10 preferably is attached (e.g. glued or welded) to the bottom 4 of the sample tube 1. In an alternative production process, the side walls 2 and the bottom 4 of the sample tube 1 are back-molded (preferably PURELL HP 371 P nature) to a rear side 11 of the opaque material 7 of the two-component plastic sheet 10.

In addition to the already described features of the sample tube 1 according to one of the previously described embodiments, the side walls 3 and the bottom 4 of the sample tube 1 preferably comprise different plastic components including one that provides the sample tube 1 with an enhanced fluid barrier. Actually, the side walls 3 and the bottom 4 comprise two layers of polypropylene (PURELL HP371P nature or PURELL HP371P colored with 1-10 wt% white colorant; e.g. TiO₂) and an intermediate polyamide barrier layer 17 in-between. The purpose of the fluid barrier layer or intermediate fluid barrier layer 17 is to block or at least considerably reduce diffusion of water molecules into or out of the tube 1 and of gas molecules (such as O₂, N₂, CO₂, or O₃) into or out of the tube 1. Accordingly, fluids are herein understood as liquids, gases or liquid/gas mixtures. Especially during long term storage and transportation, gases such as O₂ or O₃ can penetrate the sample tube 1 or microtube walls and may have a destructive effect to the chemical or biological sample stored with in the tube. On the other hand, a loss of water can dehydrate and thus damage a sample as well. Enhancing the diffusion barrier in sample tubes 1 and tight capping or sealing of these tubes therefore is targeted.

The intermediate polyamide barrier layer 17 preferably is made of a crystalline polyamide resin. Especially preferred is an intermediate polyamide barrier layer 17 that is made of nylon-MXD6, which is one of the crystalline polyamide resins that is produced through polycondensation of metaxylylene diamine (MXDA) with adipic acid by MITSUBISH GAS CHEMICAL CO. INC (Tokyo, Japan). The preferred maximum thickness of this intermediate polyamide barrier layer 17 is 40 µm.

Another preferred intermediate polyamide barrier layer 17 is made of an amorphous nylon copolymer. Especially preferred is an intermediate polyamide barrier layer 17 that is made of nylon 6I/6T, which is known as the polyamide copolymer GRIVORY® G21 produced by EMS-GRIVORY (Domat/Ems, Switzerland). The preferred thickness of this intermediate polyamide barrier layer 17 is 100-300µm.

It goes without saying that all sample tubes 1 of the present invention and described in this patent application can be equipped with such an intermediate polyamide barrier layer 17 that preferably is produced by co-extrusion with the sample tube side walls 3 and bottom 4.

Figure 4 shows a longitudinal section of a sample tube with a narrowed, three-part bottom portion and integrated identification according to a second additional embodiment which is not entirely part of the preferred embodiments of the present invention. All what has been said about the first additional embodiment applies also here. The narrowed tube bottom provides the advantage, however, that less dead volume of a liquid may rest inside the sample tube 1 after aspiration of the liquid with a liquid-handling apparatus.

Figure 5 shows a longitudinal section of a sample tube with a narrowed, three-part bottom portion, integrated carrier walls, and integrated identification according to a third additional embodiment which is not entirely part of the preferred embodiments of the present invention. All what has bee said about the first additional embodiment applies also here. Like in the second additional embodiment also here, the narrowed tube bottom provides the advantage that less dead volume of a liquid may residue inside the sample tube 1 after aspiration of the liquid with a liquid-handling apparatus. The carrier walls 12 provide the two-component plastic sheet 10, which consists of the opaque material 7 of the identification portion 6 and the transparent cover layer 8 with the laser sensitive filler, with a guard against scratching the lower surface of the transparent cover layer 8. In addition, the carrier walls 12 define a large footprint of the sample tube 1, thus maximizing its ability to safely stand upright.

Also this third additional embodiment of the sample tube 1 comprises different plastic components including one that provides the sample tube 1 with an enhanced fluid barrier (as has been specified in connection with the first additional embodiment). Also here, the opaque material 7 of the identification portion 6 and the transparent cover layer 8 with the laser sensitive filler together form a two-component plastic sheet 10, which may be produced by multi-component injection molding, laminating or back-molding. This two-component plastic sheet 10 preferably is attached (e.g. glued or welded) to the bottom 4 of the sample tube 1. In an alternative production process, the side walls 2 and the bottom 4 of the sample tube 1 are back-molded (preferably PURELL HP 371 P nature) to a rear side 11 of the opaque material 7 of the two-component plastic sheet 10. Preferably, in order to safely seal the sample in the sample tube 1 from the surrounding atmosphere, a seal film or sealing foil 21 (as shown) is applied to the border of the side walls 2 at the top opening 2 of the sample tube 1 by welding or gluing. This sealing film or foil 21 preferably is made of aluminum, a polymer or both. A polymer laminate on an aluminum foil is preferred, when welding of the seal foil (i.e. its polymer laminate) to the sample tube is to be applied.

The Figure 6 shows a longitudinal section of a sample tube with a narrowed, three-part bottom portion, snap-on carrier walls and identification according to a fourth additional embodiment which is not entirely part of the preferred embodiments of the present invention. Here, the two-component plastic sheet 10 is back-molded and/or injection molded around its periphery with carrier walls 12, preferably of polypropylene. Producing the carrier walls 12 from PURELL HP371P nature PP is especially preferred. The carrier walls 12 are accomplished to be snapped onto accordingly sized attachment parts 13 that are formed on the side walls 2 and/or the bottom 4 of the sample tube 1. These attachment parts 13 can comprise one single ring-like depression, which's ability to be gripped by a complementary ring-like elevation of the carrier walls 12 preferably is enhanced through a relief structure. This relief structure on the side walls 2 and/or the bottom 4 of the sample tube 1 protrudes into a ring-like depression in the snapped-on carrier walls 12. Comparable to the second preferred embodiment, a protective bar 16 protrudes beyond the lower surface of the transparent cover layer 8, resulting in a recess 15 and providing the transparent cover layer 8 with a scratch protection. It is preferred that the gap between the rear side 11 of the opaque material 7 and the flat downside of the bottom is minimized and/or filled with an adhesive if a non-removable attachment of the carrier walls 12 and - more important - the identification portion 6 is desired.

Unlike in the previously described embodiments, the identification for a particular sample tube 1 according to a sixth embodiment can be produced independently from mass production of sample tubes and later snapped-on to an empty or already filled sample tune 1 of particular interest. Unlike the identification portions in the previously described five embodiments, where a simple univocal code or numbering is sufficient and preferred, the identification portion 6 of a particular sample tube 1 according to the fourth additional embodiment can carry additional information, like e.g. a laboratory identification, branding, or logo. In addition, the carrier walls can be made of a colored polymer, the colors presenting additional possibilities for coding the sample tube 1. Accordingly, one color (such as red, green, yellow, blue etc.) can be given to a special batch of samples, the batch e.g. being designated to a distinct case, sample source, laboratory etc.

Departing from this presentation in Figure 6, the side walls 2 and/or the bottom 4 of the sample tube 1 can have attachment parts 13 in the form of a series of, preferably alternating and ring-like, depressions and elevations. Accordingly, the carrier walls 12 alternatively can have a series of complementary elevations and depressions (not shown).

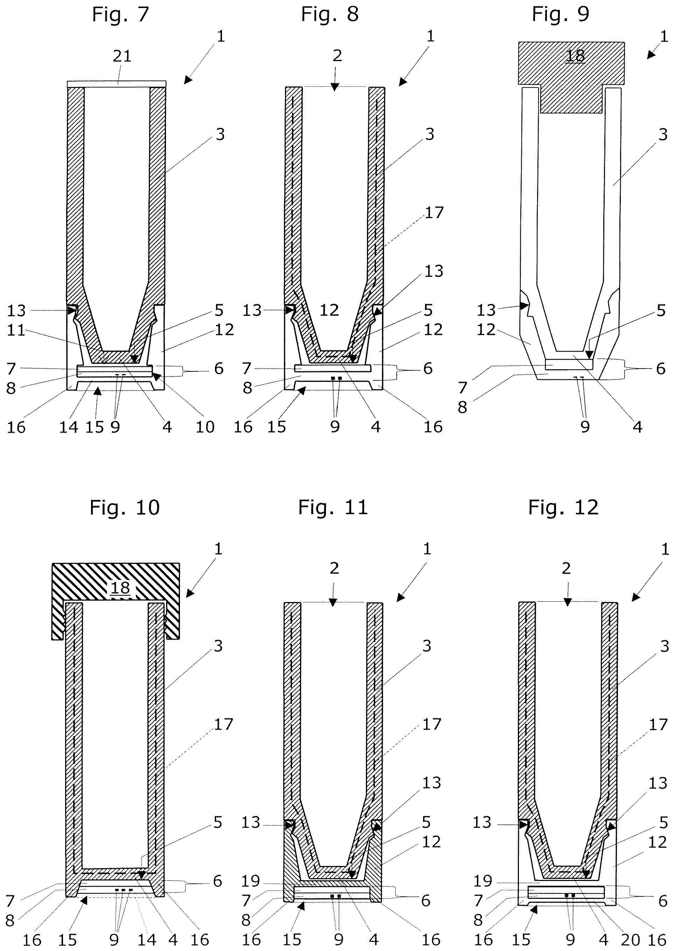

In the Figure 7, a longitudinal section of a sample tube with a narrowed, four-part bottom portion, snap-on carrier walls and identification with a protective layer according to a fifth additional embodiment is shown which is not entirely part of the preferred embodiments of the present invention. Unlike in the fourth additional embodiment, where the carrier walls 12 could have been made from any polymer material, whether it is transparent, opaque or even colored, the carrier walls 12 in the seventh embodiment are preferred to be transparent. This is because a transparent protective layer 14 is molded together with the carrier walls 12. Thus, the two-component plastic sheet 10, which consists of the opaque material 7 of the identification portion 6 and the transparent cover layer 8 with the laser sensitive filler, is guarded or protected against scratching the lower surface of the transparent cover layer 8. The carrier walls 12 can additionally be provided with a protective bar 16, which creates a recess 15 on the surface of the transparent protective layer 14 (as shown in Fig. 7). The preferred material for injection molding the carrier walls 12 and the transparent protective layer 14 is polypropylene, PURELL HP371P nature being especially preferred. Preferably, in order to safely seal the sample in the sample tube 1 from the surrounding atmosphere, a seal film or sealing foil 21 (as shown) is applied to the border of the side walls 2 at the top opening 2 of the sample tube 1 by welding or gluing. This seal film or foil 21 preferably is made of aluminum, a polymer or both. A polymer laminate on an aluminum foil is preferred, when welding of the sealing foil (i.e. its polymer laminate) to the sample tube is to be applied.

Departing from this presentation in Figure 7, the protective bar 16 and thus the recess 15 could be dispensed with, rendering the sample tube 1 with a plane surface to stand on.

The Figure 8 shows a longitudinal section of a sample tube with a narrowed, three-part bottom portion, snap-on carrier walls with a Radio Frequency Identification (RFID) tag and identification according to a sixth additional embodiment which is not entirely part of the preferred embodiments of the present invention. RFID tags are well known to comprise a semiconductor chip and a related antenna that are embedded in a polymer material. The RFID tag serves as the opaque material in this embodiment. Like in the fifth additional embodiment, the carrier walls 12 in this sixth additional embodiment are preferred to be transparent. This is because the transparent cover layer 8 is molded together with the carrier walls 12. The carrier walls 12 can additionally be provided with a protective bar 16, which creates a recess 15 on the surface of the transparent protective layer 14 (as shown in Fig. 8). The preferred material for injection molding the carrier walls 12 and the transparent cover layer 8 is polypropylene, PURELL HP371P nature being especially preferred. As already specified for the second preferred embodiment, an amount of about 0.5 to 5 wt% of the laser sensitive filler HP756197 LS is preferably added to the polypropylene of the carrier walls 12 and in particular to the transparent cover layer 8.

The RFID tag provides the sample tube 1 with particular information write-in storage and read-out possibilities. Writing and reading can be made without visual contact between the write/read device and the RFID tag, which enables fast exchange of information between the write/read device and large numbers of RFID tags. This exchange of information preferably is carried out sequentially by individually addressing every single RFID tag. Such storage and exchange of information can include personal patient data, laboratory process data etc. In addition, the information exchange with particular RFID tags attached to sample tubes 1 provides tracking of the sample tubes 1 the laboratory and even in complex laboratory systems. Individual information on the sample tubes ensures unequivocal labeling of patient samples. In addition, the RFID tag can comprise a colored polymer, the colors presenting additional possibilities for coding the sample tube 1. Accordingly, one color (such as red, green, yellow, blue etc.) can be given to a special batch of samples, the batch e.g. being designated to a distinct case, sample source, laboratory etc.

In Figure 9, a longitudinal section of a sample tube with a narrowed, three-part bottom portion, molded-on carrier walls with an RFID tag and identification according to a seventh additional embodiment is shown which is not entirely part of the preferred embodiments of the present invention. Departing from the sixth additional embodiment, where the RFID tag may be snapped onto the sample tube 1, the RFID tag is completely molded-in here:
- In a first step of a preferred production method, the RFID tag is back-molded with the transparent cover layer 8 of polypropylene (PURELL HP371P nature being especially preferred). As already specified, an amount of about 0.5 to 5 wt% of the laser sensitive filler HP756197 LS is preferably added to the polypropylene of the transparent cover layer 8. It is preferred to form the carrier walls 12 to the transparent cover layer 8 within the same step of back-molding and thus, with the same material composition.
- In a second step of the preferred production method, the RFID tag and the inside of the carrier walls 12 is preferably back-molded with the same polypropylene material (PURELL HP371P nature) as used in the first step. However, the addition of the laser sensitive filler can be dispensed with.

This will produce a transparent sample tube 1 with an opaque material 7 embedded therein. The opaque material 7 can be an RFID tag as described. Alternatively, the opaque material 7 can be made of a colored polymer, the colors presenting additional possibilities for coding the sample tube 1. Accordingly, one color (such as red, green, yellow, blue etc.) can be dedicated to a special batch of samples, the batch e.g. being designated to a distinct case, sample source, sample tube volume, laboratory etc. In addition, the sample tubes of the present invention can be sealed with cap 18 or a foil (see e.g. Figs. 5 and 7) that is glued or welded to the sample tube 1 at least in the region of or to the upper edge of the side walls 3.

In another alternative sample tube 1, the opaque material 7 of the identification portion 6 is selected from a group that comprises a colored sheet of plastic, or paper, or metal and a painted or sprayed layer. This opaque material 7 being over-molded with the transparent cover layer 8, preferably of polypropylene (preferably PURELL HP371P nature) with the laser sensitive filler (preferably 0.5-5 wt% of HP755197 LS).

The Figure 10 shows a longitudinal section of a sample tube with a flat, three-part bottom structure and integrated identification according to an eighth additional embodiment which is not entirely part of the preferred embodiments of the present invention. Departing from the second preferred embodiment, where a two component bottom structure is shown, this eighth additional embodiment is characterized by a three component bottom structure. This three component bottom structure comprises the bottom 4 of the sample tube 1, an opaque material 7, and a transparent layer 8. A preferred production method for this sample tube 1 comprises:
- A first step, in which the side walls 3, the bottom 4, and the carrier walls 12 are molded from a transparent polypropylene (PURELL HP371P nature being especially preferred).
- A second step, in which the opaque material 7 that is selected from a group which comprises a colored sheet of plastic, paper, or metal and a painted or sprayed layer, is applied to the flat downside 5 of the bottom 4.
- A third step, in which the opaque material 7 is over-molded with the transparent cover layer 8 of polypropylene (PURELL HP371P nature being especially preferred); the transparent polypropylene preferably containing an amount of about 0.5 to 5 wt% of the laser sensitive filler HP756197 LS.

This will produce a transparent sample tube 1 with an opaque material 7 embedded therein. The opaque material 7 can be an RFID tag as earlier described. Alternatively, the opaque material 7 can be made of a colored polymer, the colors presenting additional possibilities for coding the sample tube 1. Accordingly, one color (such as red, green, yellow, blue etc.) can be dedicated to a special batch of samples, the batch e.g. being designated to a distinct case, sample source, sample tube volume, laboratory etc.

The eighth additional embodiment preferably comprises protective bars 16 that are located in the periphery of the bottom 4 and that protrude over the lower surface of the transparent cover layer 8. These protective bars can be accomplished as a closed ring structure or as a number of bars that are separated by depressions (not shown). In ay case, these protective bar 16 or bars provide the transparent cover layer 8 with a protection against scratches in its surface. As an alternative protection of the surface of the transparent cover layer 8, the recess 15 between the protective bars 16 can be filled (e.g. by over-molding) with a transparent protective layer 14 (see dashed line in Figure 10) of polypropylene, preferably PURELL HP371P nature. In addition, the sample tubes of the present invention can be sealed with cap 18 or a metal sheet, preferably of aluminum that is glued or welded at least in the region of or to the upper edge of the side walls 3.

In the Figure 11, a longitudinal section of a sample tube with a narrowed, four-part bottom portion, snap-on carrier walls with an RFID tag and identification according to a ninth additional embodiment is shown which is not entirely part of the preferred embodiments of the present invention. This embodiment is similar like the eighth additional embodiment; however, it has a narrowed bottom portion and the identification portion 6 located on snap-on carrier walls 12. Actually, the opaque material 7 can be a colored RFID tag, a colored polymer, or a colored metal plate.

These colors as well as the RFID tag present additional possibilities for coding the sample tube 1 as already described. Preferably, the opaque material 7 is over-molded with the transparent cover layer 8 and back-molded with a back-molded portion 19, to which the carrier walls 12 are molded.

Here (similar as in all other embodiments), only the opaque material 7 and the transparent cover layer 8 are decisive for the contrast of the code information burned into the transparent cover layer 8. Thus, all other parts of the sample tube 1 that do not cover the identification portion 6 can be of any polymer material. For example, the side walls 3, the bottom 4, and the back-molded portion 19 with the carrier walls 12 are can be of the same polypropylene material. This polypropylene preferably is PURELL HP371P nature. Alternatively, the back-molded portion 19 with the carrier walls 12 can be of a different material, such as PURELL HP371P with any desired colorant material to provide a simple color coding for the sample tubes 1. In another alternative variant, also the side walls 3 and the bottom 4 can be of any desired material, such as PURELL HP371P with any desired colorant material to provide a combined color coding for the sample tubes 1.

Figure 12 shows a longitudinal section of a sample tube with a narrowed, five-part bottom portion, snap-on carrier walls with an RFID tag and identification according to a tenth additional embodiment which is not entirely part of the preferred embodiments of the present invention. This embodiment is similar like the ninth additional embodiment; however, the identification portion 6 is over-molded with a transparent protective layer as an over-molded portion 20. Again, the opaque material 7 can be a colored RFID tag, a colored polymer, or a colored metal plate like in the eleventh embodiment. These colors as well as the RFID tag present additional possibilities for coding the sample tube 1 as already described. Preferably, the opaque material 7 is over-molded with the transparent cover layer 8 and back-molded with a back-molded portion 19, to which the carrier walls 12 are molded. For the back-molded portion 19 and for the over-molded portion 20 as well as for the carrier walls 12, the same transparent material (preferably PURELL HP371P nature) is used. This provides a transparent envelope to the identification portion 6. Like in the previous embodiment, the side walls 3 and the bottom 4 of the sample tube 1 can be made of a polypropylene with or without colorants.
It is expressly pointed out that using a polypropylene as the polymer material in all parts of the sample tube 1 according to the invention is preferred. This selection is particularly useful for recycling of the single polymer material of these disposable sample tubes that are produced in large numbers. However, if special qualities or attributes are required for parts of the sample tube 1, those parts could be made of any other polymer material or even metal.

The sample tube 1, according to the invention and irrespective of any particular embodiment, preferably is accomplished to comprise a cap 18 that is screwed-on (see e.g. Figure 10), screwed-in (see e.g. Fig. 2), pushed-on (see Fig. 3) or pushed-in (see e.g. Fig. 9). It is especially preferred that the sample tubes 1 are accomplished as microtubes that fit into a compartment of a rack for 24, 96, 384, or 1536 of such microtubes. Such a rack preferably has the dimensions of a standard microplate according to ANSI / SBS standards. The most preferred overall tube shape is cylindrical; however, slight deviation of the cylindrical shape can be allowed. Alternatively, in order to safely seal the sample in the sample tube 1 from the surrounding atmosphere, a seal film or seal foil 21 (as shown in the Figs. 5 and 7) is applied to the border of the side walls 2 at the top opening 2 of the sample tube 1, preferably by welding or gluing. This sealing film or foil 21 preferably is made of aluminum, a polymer or both. A polymer laminate on an aluminum foil is preferred, when welding of the aluminum seal foil (i.e. its polymer laminate) to the sample tube is to be applied.

Deviating form the figures shown, the sample tube 1 according to the invention can be concavely shaped inside so that the bottom 4 merges into the side walls 3 in a curved manner.

As it can be seen from the presented set of embodiments, the material combination for the sample tube according to the invention can be chosen such that the tube side walls 3 and the bottom 4 are of one preferred material (e.g. PURELL HP371P nature with the laser sensitive filler HP755197 LS) that does provide the irradiated area 9, i.e. the identification code with a contrasting color (see Figs. 1 and 2). If another material is chosen such as e.g. PURELL HP371P nature, an additional opaque material 7 is needed to provide the irradiated area 9, i.e. the identification code with a contrasting color (see Figs. 3 to 12).

It will be of advantage to use flanges or fins (not shown), which preferably extend from the tube side walls 3 in order to prevent the sample tube 1 from being turned around its axis during one of the operations of screwing-in, screwing-on or during unscrewing a cap 18. Such fins or flanges preferable engage within grooves inside of the compartments of a rack for storing the sample tubes 1. The shape and distribution of these grooves preferably is adapted to the shape and distribution of the flanges or fins. In addition, retention means in the compartments of the rack are preferred as well in order to hold the sample tube 1 in the rack during withdrawal of a pushed-in or pushed-on cap. Such retention means (e.g. springs, latches, or hooks) preferably engage with respective depressions on or in the sample tubes 1 (not shown). In addition, such retention means also prevent the tubes from unintentionally falling out of the rack's compartments.

The inventors provided a broad range of different embodiments of the sample tube 1, some according to the preferred embodiments of the present invention and others that are not entirely part of preferred embodiments. The same reference numbers refer to the same or at least similar features of the different embodiments even if they are not specifically addressed by the specification in each case. It is expressly noted here, that any combinations of features shown or described with respect to one or more of these embodiments also belong to the scope of the present invention. Thus, each tube shown in the attached drawings or described in the specification can e.g. be equipped with or without an intermediate polyamide barrier layer 17 and with or without a closing cap 18 or a sealing foil 21, independently on the type of the identification that is provided in the bottom portion of the sample tube 1.

### Reference numerals

- 1: sample tube
- 2: top opening
- 3: side walls
- 4: bottom
- 5: flat downside of the bottom
- 6: identification portion
- 7: opaque material
- 8: transparent cover layer
- 9: irradiated area
- 10: two-component plastic sheet
- 11: rear side of the opaque material of the two-component plastic sheet
- 12: carrier walls
- 13: attachment parts
- 14: transparent protective layer
- 15: recess
- 16: protective bar
- 17: intermediate polyamide barrier layer
- 18: cap, screwed-on or pushed-on, screwed-in or pushed-in
- 19: back-molded portion
- 20: over-molded portion
- 21: seal film, sealing foil

## Claims

1. Sample tube (1) with a top opening (2) that is surrounded by side walls (3) which merge into a bottom (4), the bottom (4) of the sample tube (1) comprising an essentially flat downside (5) that is arranged farther to the top opening (2), wherein the sample tube comprises an identification portion (6) located at the bottom (4) of the sample tube (1), **characterized in that** the side walls (3) and bottom (4) of sample tube form an integral body integrally of an opaque polymer material (7) so that the bottom (4) and side walls (3) are integrally of the same opaque polymer material having a first color and the identification portion (6) is composed of:
i) the opaque polymer material (7) that is integrally the same material for the side walls (3) and the bottom (4) of the sample tube (1) having the first color, and
ii) a transparent cover layer (8) disposed on the essentially flat downside (5) of the bottom (4), wherein the transparent cover layer (8) comprises a laser sensitive filler that, upon irradiation with a laser marking beam, turns an irradiated area (9) of the transparent cover layer (8) into an opaque area with a second color that is contrasting from the first color.

2. Sample tube (1) according to claim 1, **characterized in that** the irradiated area (9) is part of an identification marking which is selected from a group that comprises a linear 1-D barcode, a circular 1-D barcode, and a 2-D barcode.

3. Sample tube (1) according to claim 1 or 2, **characterized in that** the opaque polymer material (7) has a white or milky white first color, wherein the second color is a dark color selected from a group comprising grey, red, blue, green, and black.

4. Sample tube (1) according to claim 3, **characterized in that** the sample tube (1) with its side walls (2) and bottom (4) is accomplished as an integral injection molded body of polypropylene.

5. Sample tube (1) according to claim 1 or 2, **characterized in that** the opaque polymer material (7) of the identification portion (6) exhibits a first bright color that is selected from a group comprising white, milky white, grey, red, blue, green, yellow, and orange, wherein the second color is a dark color selected from a group comprising grey, red, blue, green and black.

6. Sample tube (1) according to claim 5, **characterized in that** the opaque polymer material (7) of the identification portion (6) and the transparent cover layer (8) with the laser sensitive filler together form a two-component plastic sheet (10).

7. Sample tube (1) according to claim 5 or 6, **characterized in that** the opaque polymer material (7) of the identification portion (6) is accomplished as a radiofrequency identification (RFID) tag which is covered by a transparent cover layer (8) with the laser sensitive filler.

8. Sample tube (1) according to claim 6 or 7, **characterized in that** the two-component plastic sheet (10) is attached to the bottom (4) of the sample tube (1).

9. Sample tube (1) according to claim 6 or 7, **characterized in that** the side walls (2) and the bottom (4) of the sample tube (1) are back-molded to a rear side (11) of the opaque polymer material (7) of the two-component plastic sheet (10).

10. Sample tube (1) according to claim 6 or 7, **characterized in that** the two-component plastic sheet (10) is back-molded and/or injection molded around its periphery with carrier walls (12), preferably of polypropylene, that are accomplished to be snapped onto accordingly sized attachment parts (13) that are formed on the side walls (2) and/or the bottom (4) of the sample tube (1).

11. Sample tube (1) according to any one of the preceding claims, **characterized in that** the transparent cover layer (8) is made of polypropylene comprising the filler that is sensitive to laser irradiation.

12. Sample tube (1) according to claim 5, **characterized in that** the opaque polymer material (7) of the identification portion (6) is selected from a group that comprises a colored sheet of plastic, or paper, or metal and a painted or sprayed layer, this opaque polymer material (7) being over-molded with the transparent cover layer (8), preferably of polypropylene, that comprises the laser sensitive filler.

13. Sample tube (1) according to any one of the preceding claims, **characterized in that** the transparent cover layer (8) is over-molded with a transparent protective layer (14), preferably of polypropylene.

14. Sample tube (1) according to one of the claims 1 to 12, **characterized in that** the transparent cover layer (8) is situated in a recess (15) which is overlapped by a protective bar (16), preferably of polypropylene, the protective bar (16) being part of the side walls (3) or the bottom (4) of the sample tube (1).

15. Sample tube (1) according to any one of the preceding claims, **characterized in that** the side walls (3) and the bottom (4) of the sample tube (1) comprise different plastic components including one that provides the sample tube (1) with an enhanced fluid barrier.

16. Sample tube (1) according to claim 15, **characterized in that** the side walls (3) and the bottom (4) comprise two layers of polypropylene and an intermediate polyamide barrier layer (17) in-between.

17. Sample tube (1) according to claim 16, **characterized in that** the intermediate polyamide barrier layer (17) is made of a crystalline polyamide resin or an amorphous nylon copolymer.

18. Sample tube (1) according to any one of the preceding claims, **characterized in that** the side walls (3) define an essentially cylindrical shape of the sample tube (1).

19. Sample tube (1) according to any one of the preceding claims, **characterized in that** the sample tube (1) is accomplished as a microtube that fits into a compartment of a rack for 24, 96, 384, or 1536 of such microtubes.

20. Sample tube (1) according to any one of the preceding claims, **characterized in that** the sample tube (1) comprises a cap (18) that is screwed-on or pushed-on, screwed-in or pushed-in or a sealing foil or film (21) that is glued-on or weldedon.

## Patentansprüche

1. Probenröhrchen (1) mit einer oberen Öffnung (2), welche von Seitenwänden (3) umgeben ist, welche mit einem Boden (4) verschmelzen, wobei der Boden (4) des Probenröhrchens (1) eine im Wesentlichen flache Unterseite (5) aufweist, welche weiter von der oberen Öffnung (2) angeordnet ist, wobei das Probenröhrchen einen Kennzeichnungsbereich (6) aufweist, welcher sich am Boden (4) des Probenröhrchens (1) befindet, **dadurch gekennzeichnet, dass** die Seitenwände (3) und der Boden (4) des Probenröhrchens einen gemeinsamen Körper aus einem gemeinsamen opaken Polymermaterial (7) bilden, sodass der Boden (4) und die Seitenwände (3) aus dem gemeinsamen opaken Polymermaterial mit einer ersten Farbe sind und der Kennzeichnungsbereich (6) besteht aus:
i) dem opaken Polymermaterial (7), welches das gleiche Material ist wie das der Seitenwände (3) und des Bodens (4) des Probenröhrchens (1), mit der ersten Farbe, und
ii) einer transparenten Deckschicht (8), welche auf der im Wesentlichen flachen Unterseite (5) des Bodens (4) aufgebracht ist, wobei die transparente Deckschicht (8) einen Laser-empfindlichen Füllstoff aufweist, welcher bei Bestrahlung mit einem Laser-Markierungsstrahl, einen Bestrahlungsbereich (9) der transparenten Deckschicht (8) in einen opaken Bereich mit einer zweiten Farbe verwandelt, welche sich von der ersten Farbe unterscheidet.

2. Probenröhrchen (1) gemäss Anspruch 1, **dadurch gekennzeichnet, dass** der Bestrahlungsbereich (9) Teil einer Kennzeichnungsmarkierung ist, welche aus einer Gruppe ausgewählt ist, welche einen linearen 1-D Barcode, einen kreisförmigen 1-D Barcode und einen 2-D Barcode umfasst.

3. Probenröhrchen (1) gemäss Anspruch 1 oder 2, **dadurch gekennzeichnet, dass** das opake Polymermaterial (7) eine weisse oder milchig weisse erste Farbe hat, wobei die zweite Farbe eine dunkle Farbe ist, welche aus der Gruppe umfassend Grau, Rot, Blau, Grün und Schwarz ausgewählt ist.

4. Probenröhrchen (1) gemäss Anspruch 3, **dadurch gekennzeichnet, dass** das Probenröhrchen (1) mit seinen Seitenwänden (2) und seinem Boden (4) als einstückiger Spritzgusskörper aus Polypropylen hergestellt ist.

5. Probenröhrchen (1) gemäss Anspruch 1 oder 2, **dadurch gekennzeichnet, dass** das opake Polymermaterial (7) des Kennzeichnungsbereiches (6) eine erste helle Farbe zeigt, welche aus der Gruppe umfassend Weiss, Milchweiss, Grau, Rot, Blau, Grün, Gelb, und Orange ausgewählt ist, wobei die zweite Farbe eine dunkle Farbe ist, welche aus der Gruppe umfassend Grau, Rot, Blau, Grün und Schwarz ausgewählt ist.

6. Probenröhrchen (1) gemäss Anspruch 5, **dadurch gekennzeichnet, dass** das opake Polymermaterial (7) des Kennzeichnungsbereiches (6) und die transparente Deckschicht (8) mit dem Laser-empfindlichen Füllstoff zusammen eine Zwei-Komponenten-Plastikfolie (10) bilden.

7. Probenröhrchen (1) gemäss Anspruch 5 oder 6, **dadurch gekennzeichnet, dass** das opake Polymermaterial (7) des Kennzeichnungsbereiches (6) als Radio-Frequenz-Identifikation (RFID) Marke hergestellt ist, welche mit einer transparenten Deckschicht (8) mit dem Laser-empfindlichen Füllstoff bedeckt ist.

8. Probenröhrchen (1) gemäss Anspruch 6 oder 7, **dadurch gekennzeichnet, dass** die Zwei-Komponenten-Plastikfolie (10) am Boden (4) des Probenröhrchens (1) befestigt ist.

9. Probenröhrchen (1) gemäss Anspruch 6 oder 7, **dadurch gekennzeichnet, dass** die Seitenwände (2) und der Boden (4) des Probenröhrchens (1) an eine Rückseite (11) des opaken Polymermaterials (7) der Zwei-Komponenten-Plastikfolie (10) hinterspritzt sind.

10. Probenröhrchen (1) gemäss Anspruch 6 oder 7, **dadurch gekennzeichnet, dass** die Zwei-Komponenten-Plastikfolie (10) um seine Peripherie mit Stützwänden (12) hinterspritzt und/oder spritzgegossen ist, vorzugsweise aus Polypropylen, welche hergestellt sind, um auf Befestigungsteile (13) entsprechender Grösse aufgeschnappt zu werden, welche an den Seitenwänden (2) und/oder am Boden (4) des Probenröhrchens (1) ausgebildet sind.

11. Probenröhrchen (1) gemäss einem der vorangehenden Ansprüche, **dadurch gekennzeichnet, dass** die transparente Deckschicht (8) aus Polypropylen ist, welches das Füllmaterial umfasst, welches empfindlich für Laserstrahlung ist.

12. Probenröhrchen (1) gemäss Anspruch 5, **dadurch gekennzeichnet, dass** das opake Polymermaterial (7) des Kennzeichenbereiches (6) aus der Gruppe ausgewählt ist, welche eine farbige Folie aus Plastik, oder Papier, oder Metall und eine gemalte oder gesprayte Schicht umfasst, wobei das opake Polymermaterial (7) mit der transparenten Deckschicht (8) überspritzt ist, vorzugsweise aus Polypropylen, welches den Laser-empfindliche Füllstoff umfasst.

13. Probenröhrchen (1) gemäss einem der vorangehenden Ansprüche, **dadurch gekennzeichnet, dass** die transparente Deckschicht (8) mit einer transparenten Schutzschicht (14) überspritzt ist, vorzugsweise aus Polypropylen.

14. Probenröhrchen (1) gemäss einem der Ansprüche 1 bis 12, **dadurch gekennzeichnet, dass** sich die transparente Deckschicht (8) in einer Ausnehmung (15) befindet, welche von einem Schutzbalken (16) überlappt ist, vorzugsweise aus Polypropylen, wobei der Schutzbalken (16) Teil der Seitenwände (3) oder des Bodens (4) des Probenröhrchens (1) ist.

15. Probenröhrchen (1) gemäss einem der vorangehenden Ansprüche, **dadurch gekennzeichnet, dass** die Seitenwände (3) und der Boden (4) des Probenröhrchens (1) unterschiedliche Plastikkomponenten umfasst, einschliesslich einer, welche das Probenröhrchen (1) mit einer verbesserten Flüssigkeitsbarriere versieht.

16. Probenröhrchen (1) gemäss Anspruch 15, **dadurch gekennzeichnet, dass** die Seitenwände (3) und der Boden (4) zwei Schichten aus Polypropylen umfassen und dazwischen eine dazwischenliegende Polyamid-Barrieren-Schicht (17).

17. Probenröhrchen (1) gemäss Anspruch 16, **dadurch gekennzeichnet, dass** die dazwischenliegende Polyamid-Barrieren-Schicht (17) aus einem kristallinen Polyamid-Harz oder aus einem amorphen Nylon-Copolymer besteht.

18. Probenröhrchen (1) gemäss einem der vorangehenden Ansprüche, **dadurch gekennzeichnet, dass** die Seitenwände (3) eine im Wesentlichen zylindrische Form des Probenröhrchens (1) definieren.

19. Probenröhrchen (1) gemäss einem der vorangehenden Ansprüche, **dadurch gekennzeichnet, dass** das Probenröhrchen (1) als Mikro-Röhrchen ausgeführt ist, welches in ein Fach eines Racks für 24, 96, 384, oder 1536 solcher Mikro-Röhrchen passt.

20. Probenröhrchen (1) gemäss einem der vorangehenden Ansprüche, **dadurch gekennzeichnet, dass** das Probenröhrchen (1) einen Deckel (18) umfasst, welcher aufgeschraubt oder aufgedrückt, eingeschraubt oder eingedrückt ist oder eine Dichtfolie oder einen Dichtfilm (21) umfasst, welcher aufgeklebt oder aufgeschweisst ist.

## Revendications

1. Tube d'échantillon (1) avec une ouverture supérieure (2) entourée de parois latérales (3) qui se fondent dans un fond (4), le fond (4) du tube d'échantillon (1) comprenant une face inférieure essentiellement plane (5) qui est agencé plus loin de l'ouverture supérieure (2), où le tube d'échantillon comprenant une partie d'identification (6) située au fond (4) du tube d'échantillon (1), **caractérisé en ce que** les parois latérales (3) et le fond (4) du tubes d'échantillon forment un corps intégral d'un matériau polymère opaque (7) de sorte que le fond (4) et les parois latérales (3) sont intégralement du même matériau polymère opaque ayant une première couleur et la partie d'identification (6) est composé de:
i) le matériau polymère opaque (7) qui est intégralement le même matériau pour les parois latérales (3) et le fond (4) du tube d'échantillon (1) ayant la première couleur, et
ii) une couche de couverture transparente (8) disposée sur la face inférieure essentiellement plane (5) du fond (4), où la couche de couverture transparente (8) comprenant un matériau de remplissage sensible au laser qui, lors de l'irradiation par un faisceau de marquage laser, tourne une zone irradiée (9) de la couche de couverture transparente (8) en une zone opaque avec une deuxième couleur contrastante avec la première couleur.

2. Tube d'échantillon (1) selon la revendication 1, **caractérisé en ce que** la zone irradiée (9) fait partie d'un marquage d'identification sélectionné d'un groupe comprenant un code à barres 1-D linéaire, un code à barres 1-D circulaire et un code à barres 2-D.

3. Tube d'échantillon (1) selon la revendication 1 ou 2, **caractérisé en ce que** le matériau polymère opaque (7) présente une première couleur blanche ou blanc laiteux, où la deuxième couleur est une couleur sombre choisie d'un groupe comprenant gris, rouge, bleu, vert, et noir.

4. Tube d'échantillon (1) selon la revendication 3, **caractérisé en ce que** le tube d'échantillon (1) avec ses parois latérales (2) et son fond (4) est réalisé comme corps moulé par injection intégral en polypropylène.

5. Tube d'échantillon (1) selon la revendication 1 ou 2, **caractérisé en ce que** le matériau polymère opaque (7) de la partie d'identification (6) présente une première couleur vive qui est choisie d'un groupe comprenant blanc, blanc laiteux, gris, rouge, bleu, vert, jaune et orange, la deuxième couleur étant une couleur sombre choisie d'un groupe comprenant gris, rouge, bleu, vert et noir.

6. Tube d'échantillon (1) selon la revendication 5, **caractérisé en ce que** le matériau polymère opaque (7) de la partie d'identification (6) et la couche de couverture transparente (8) avec matériau de remplissage sensible au laser forment ensemble une feuille de matière plastique à deux composants (10).

7. Tube d'échantillon (1) selon la revendication 5 ou 6, **caractérisé en ce que** le matériau polymère opaque (7) de la partie d'identification (6) est réalisé sous la forme d'une étiquette d'identification par radiofréquence (RFID) recouverte d'une couche de couverture transparente (8) avec le matériau de remplissage sensible au laser.

8. Tube d'échantillon (1) selon la revendication 6 ou 7, **caractérisé en ce que** la feuille de matière plastique à deux composants (10) est fixée au fond (4) du tube d'échantillon (1).

9. Tube d'échantillon (1) selon la revendication 6 ou 7, **caractérisé en ce que** les parois latérales (2) et le fond (4) du tube d'échantillon (1) sont surmoulés sur un côté arrière (11) du matériau polymère opaque (7) de la feuille de plastique à deux composants (10).

10. Tube d'échantillon (1) selon la revendication 6 ou 7, **caractérisé en ce que** la feuille de matière plastique à deux composants (10) est surmoulée et/ou moulée par injection autour sa périphérie avec des parois de support (12) réalisées de préférence en polypropylène, qui sont conçus pour être encliqueter sur des pièces de fixation (13) de taille correspondante formées sur les parois latérales (2) et/ou le fond (4) du tube d'échantillon (1).

11. Tube d'échantillon (1) selon l'une quelconque des revendications précédentes, **caractérisé en ce que** la couche de couverture transparente (8) en polypropylène comprenant le matériau de remplissage sensible au laser.

12. Tube d'échantillon (1) selon la revendication 5, **caractérisé en ce que** le matériau polymère opaque (7) de la partie d'identification (6) est choisi d'un groupe comprenant une feuille colorée en plastique, ou en papier, ou en métal et une couche peinte ou pulvérisée, ce matériau polymère opaque (7) étant surmoulé avec la couche de couverture transparente (8), de préférence en polypropylène, qui comprend le matériau de remplissage sensible au laser.

13. Tube d'échantillon (1) selon l'une quelconque des revendications précédentes, **caractérisé en ce que** la couche de couverture transparente (8) est surmoulée avec une couche de protection transparente (14), de préférence en polypropylène.

14. Tube d'échantillon (1) selon l'une des revendications 1 à 12, **caractérisé en ce que** la couche de couverture transparente (8) est située dans un évidement (15) qui est recouvert par une barre de protection (16), de préférence en polypropylène, la barre (16) faisant partie des parois latérales (3) ou du fond (4) du tube d'échantillon (1).

15. Tube d'échantillon (1) selon l'une quelconque des revendications précédentes, **caractérisé en ce que** les parois latérales (3) et le fond (4) du tube d'échantillon (1) comprennent des composants en matière plastique différents, dont un qui fournit le tube d'échantillon (1) avec une barrière aux fluides améliorée.

16. Tube d'échantillon (1) selon la revendication 15, **caractérisé en ce que** les parois latérales (3) et le fond (4) comprennent deux couches de polypropylène et une couche barrière intermédiaire en polyamide (17) intermédiaire.

17. Tube d'échantillon (1) selon la revendication 16, **caractérisé en ce que** la couche barrière intermédiaire en polyamide (17) est constituée d'une résine polyamide cristalline ou d'un copolymère de nylon amorphe.

18. Tube d'échantillon (1) selon l'une quelconque des revendications précédentes, **caractérisé en ce que** les parois latérales (3) définissent une forme essentiellement cylindrique du tube d'échantillon (1).

19. Tube d'échantillon (1) selon l'une quelconque des revendications précédentes, **caractérisé en ce que** le tube d'échantillon (1) est réalisé comme micro-tube qui rentre dans un compartiment d'une crémaillère pour 24, 96, 384 ou 1536 de tels micro-tubes.

20. Tube d'échantillon (1) selon l'une quelconque des revendications précédentes, **caractérisé en ce que** le tube d'échantillon (1) comprend un capuchon (18) vissé sur ou enfoncé sur, vissé dans ou enfoncé dans ou une feuille ou un film d'étanchéité (21) collé sur ou soudé sur.
